# EUROPÄISCHE PATENTSCHRIFT

(11) **EP 1 172 587 B1**
(45) Veröffentlichungstag und Bekanntmachung des Hinweises auf die Patenterteilung: **16.01.2008**
(21) Anmeldenummer: 01115726.0
(22) Anmeldetag: 06.07.2001
(51) Int. Cl.: F16H 61/32

(54) **Betätigungsvorrichtung für die Schaltwelle eines Automatikgetriebes**
Actuator for a shifting shaft of an automatic gearbox
Dispositif de commande d'une arbre de commande des vitesses pour une boîte de vitesses automatique

(30) Priorität: 14.07.2000 DE 10034316; 11.08.2000 DE 10040031
(43) Veröffentlichungstag der Anmeldung: 16.01.2002
(73) Patentinhaber: TRW Automotive Electronics & Components GmbH, 78315 Radolfzell (DE)
(72) Erfinder: Peter, Cornelius, 77815 Bühl (DE)
(74) Vertreter: Degwert, Hartmut

(56) Entgegenhaltungen:
- EP-A- 0 301 724
- EP-A- 0 859 173
- DE-A1- 19 851 466
- DE-A1- 19 857 714
- DE-A1- 19 904 022
- US-A- 5 954 178
- US-A- 5 979 261

## Beschreibung

Die Erfindung betrifft eine Betätigungsvorrichtung für die Schaltwelle eines Automatikgetriebes in einem Kraftfahrzeug.

In Kraftfahrzeugen mit Automatikgetriebe wird zwischen den verschiedenen Fahrstellungen, einschließlich der Park-Stellung, mittels eines Schalthebels umgeschaltet, der üblicherweise über dem Getriebetunnel des Fahrzeugs angeordnet ist. Dieser Schalthebel ist mit einer Schaltwelle des Getriebes über einen Seilzug oder ein Gestänge gekoppelt.

DE 198 57 714 A1 offenbart ein Getriebe mit einer Betätigungsvorrichtung zum automatisierten Schalten und Wählen einer Getriebeübersetzung. Die Betätigungsvorrichtung weist einen Betätigungsaktor auf, der einen Antrieb, beispielsweise einen Elektromotor aufweist. Mit Hilfe des Betätigungsaktors kann eine zentrale Schaltwelle sowohl in axialer Richtung bewegt als auch gedreht werden.

Durch die Erfindung wird eine Betätigungsvorrichtung für die Schaltwelle eines Automatikgetriebes in einem Fahrzeug bereitgestellt, die keinen manuell zu betätigenden Schalthebel umfaßt, so daß der in herkömmlichen Fahrzeugen für den Schalthebel vorgesehene Platz für andere Zwecke genutzt werden kann.

Die erfindungsgemäße Betätigungsvorrichtung umfaßt die Merkmale des Anspruchs 1 : ein Gehäuse, eine im Gehäuse drehbar gelagerte Betätigungswelle, einen Elektromotor, ein reversibles, verlustarmes Untersetzungs-Getriebe, durch das der Läufer des Elektromotors direkt an die Betätigungswelle angekoppelt ist, einen Kraftspeicher, durch den die Betätigungswelle unabhängig von dem Elektromotor antreibbar ist, eine elektronische Steuereinheit, die den Elektromotor in Abhängigkeit von Steuersignalen ansteuert, eine Kopplungseinrichtung zur Ankopplung der Betätigungswelle an die Schaltwelle, wobei die Drehung der Betätigungswelle durch die Kopplungseinrichtung in den Steuersignalen entsprechende Drehwinkel der Schaltwelle umgesetzt wird.

Die Betätigungsvorrichtung ist dadurch gekennzeichnet, daß die Drehstellungen der Betätigungswelle durch einen im Ruhezustand selbsttätig eingreifenden Riegel gesichert sind, der durch einen Elektromagnet in eine Freigabestellung bewegbar ist und daß der Kraftspeicher die Betätigungswelle permanent in eine Schaltstellung beaufschlagt, die der Parkstellung des Automatikgetriebes des Kraftfahrzeugs entspricht.

Die erfindungsgemäße Betätigungsvorrichtung ist ein elektromechanischer Stellantrieb, der durch elektrische Steuersignale angesteuert werden kann. Die elektrischen Steuersignale können durch manuell betätigbare Schalter erzeugt werden, die an beliebiger Stelle im Fahrzeug angeordnet werden können, beispielsweise an der Armaturentafel oder am Lenkrad.

Ein Ziel der Erfindung besteht darin, daß beim Abziehen des Zündschlüssels und stillstehendem Fahrzeug das Automatikgetriebe in die Park-Stellung umgeschaltet wird. Der Fahrer ist dann nicht gezwungen, vor dem Abziehen des Zündschlüssels in die Park-Stellung umzuschalten. Um die Forderung zu erfüllen, muß die Umschaltung in die Park-Stellung auch dann erfolgen, wenn die Stromzufuhr zum Elektromotor ausfällt. Für diesen Fall ist ein Kraftspeicher vorgesehen, durch den die Betätigungswelle unabhängig von dem Elektromotor angetrieben werden kann. Die Betätigungswelle wird also im Normalbetrieb durch den Elektromotor über das Untersetzungs-Getriebe und im Notbetrieb über den Kraftspeicher angetrieben. Um aber auf eine mechanische Umschaltvorrichtung verzichten zu können, die mit der geforderten Zuverlässigkeit kaum zu verwirklichen wäre, sieht die Erfindung vor, daß sowohl der Kraftspeicher für den Notfall als auch der elektromotorische Antrieb für den Normalbetrieb permanent an die Betätigungswelle gekoppelt sind. Der Elektromotor arbeitet also gegen den Kraftspeicher, beispielsweise eine gespannte Spiralfeder, und der Kraftspeicher schleppt im Notfall den Elektromotor über das nun ins Schnelle übersetzende Untersetzungs-Getriebe mit. Dieses Konzept setzt einerseits einen besonders kräftigen Elektromotor und andererseits eine verlustarme Ausführung des Un-tersetzungs-Getriebes voraus.

Gemäß einer vorteilhaften Ausführungsform der Erfindung ist als Elektromotor ein bürstenloser Außenläufer-Motor vorgesehen. Besonders geeignet ist ein Vier-Phasen-Außenläufer-Motor mit 28 Polen. Um eine Lageregelung zu ermöglichen, wird ein Drehmelder verwendet, der durch zwei dem Rotor zugeordnete Hall-Sensoren verwirklicht werden kann. Mit einem solchen Drehmelder kann der absolute Drehwinkel des Rotors bestimmt werden. Die Ansteuerung der Statorwicklungen erfolgt mit extrem niederohmigen Leistungs-Halbleiterschaltem vom Typ FET.

Ein besonders verlustarmes Untersetzungs-Getriebe, das zur Übertragung eines hohen Drehmoments geeignet ist, wird durch eine zweistufige Ausführung erreicht. Die erste Stufe ist ein Riementrieb mit einer Seilscheibe kleinen Durchmessers am Läufer des Elektromotors, die über den Treibriemen, insbesondere Keilriemen, mit einer Seilscheibe größeren Durchmessers gekoppelt ist. Die zweite Stufe ist ein Planetengetriebe, dessen Sonnenrad drehfest an die Seilscheibe größeren Durchmessers angeschlossen ist und dessen Planetenträger drehfest mit der Betätigungswelle gekoppelt ist. Das Untersetzungsverhältnis eines solchen zweistufigen Untersetzungs-Getriebes beträgt beispielsweise etwa 40 : 1.

Eine zweite Zielvorgabe besteht darin, daß ohne einen expliziten Stellbefehl an die Steuereinheit ein Verstellvorgang mit absoluter Sicherheit ausgeschlossen wird.

Diese Zielvorgabe wird mit einer Weiterbildung der Erfindung dadurch gelöst, daß die Betätigungswelle in ihren verschiedenen diskreten Schaltstellungen durch einen im Ruhezustand aktiven Riegel arretierbar ist. Zur Entriegelung bedarf es eines Stromimpulses an einen Elektromagnet, der den Riegel kurzzeitig in einer Freigabestellung hält. Der Elektromagnet hat zwei von einander unabhängige Erregerwicklungen. Der erste Erregerwicklung wird im Normalbetrieb durch die Steuereinheit angesteuert, wenn ein Stellbefehl umgesetzt wird. Die andere Erregerwicklung wird durch ein vom Zündschloß des Fahrzeugs abgeleitetes Signal angesteuert, wenn der Zündschlüssel abgezogen wird und das Fahrzeug stillsteht. Für dieses Signal muß ein von der Bordspannung unabhängiger Energievorrat bereitgestellt werden, der aber klein sein kann und beispielsweise mit einem Speicherkondensator verwirklicht ist, der mit dem Bordnetz über eine Entkoppelungsdiode verbunden ist.

Weitere Merkmale und Vorteile der Erfindung ergeben sich aus der folgenden Beschreibung einer bevorzugten Ausführungsform und aus den beigefügten Zeichnungen, auf die Bezug genommen wird.

In den Zeichnungen zeigen:
Figur 1 eine Draufsicht auf die obere Breitseite des Gehäuses der Vorrichtung in einer ersten Schaltstellung;
Figur 2 eine analoge Ansicht in einer zweiten Schaltstellung;

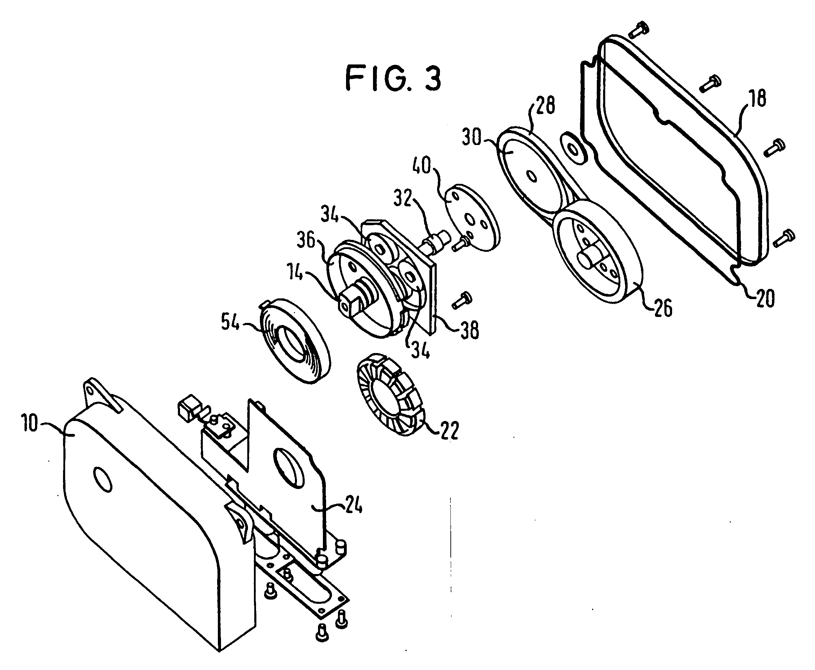

Figur 3 eine Explosionsansicht der Vorrichtung;
Figur 4 eine vergrößerte perspektivische Teilansicht der Vorrichtung; und

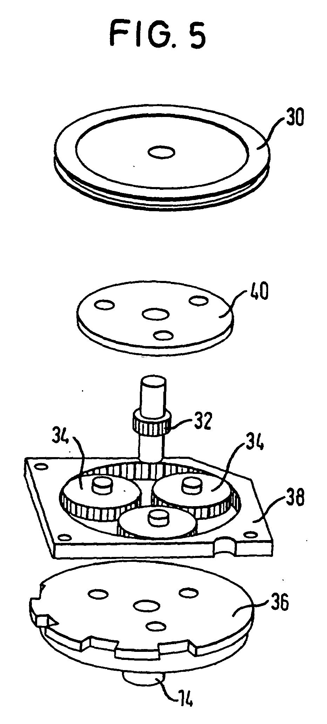

Figur 5 eine weitere Detailansicht der Vorrichtung in Explosionsdarstellung.

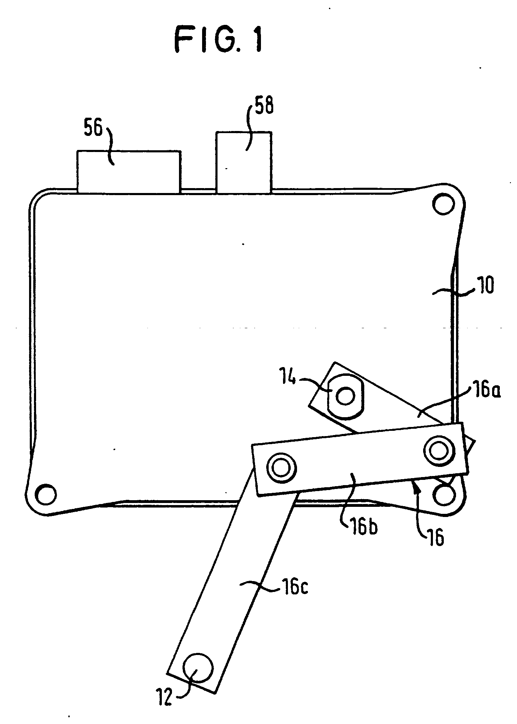

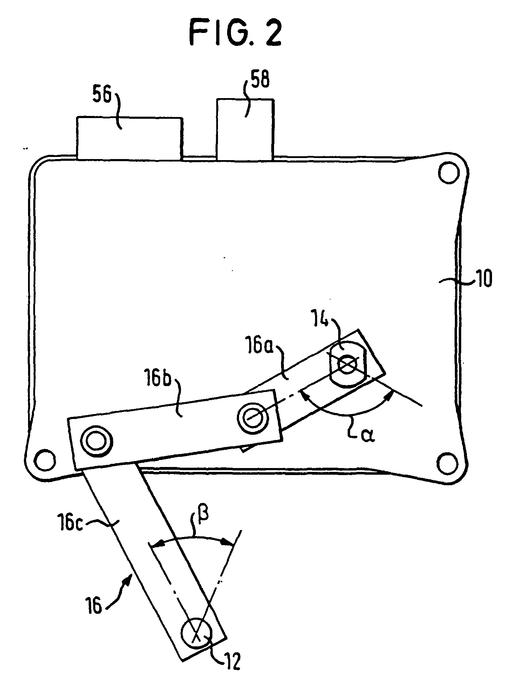

Die Betätigungsvorrichtung für die Schaltwelle eines Automatikgetriebes in einem Kraftfahrzeug ist in einem flachen, quaderförmigen Gehäuse 10 aufgebaut, das an der Oberseite des Getriebeblocks neben einer aus diesem herausragenden Schaltwelle 12 angebaut werden kann. Die drehbare Schaltwelle 12 kann verschiedene diskrete Schaltstellungen einnehmen, die den Fahrstufen des Getriebes entsprechen. Aus dem Gehäuse 10 ragt eine Betätigungswelle 14 heraus, deren Achse parallel zur Achse der Schaltwelle 12 ist. Die Betätigungswelle 14 ist mit der Schaltwelle 12 durch ein Hebelgestänge 16 gekoppelt, das aus drei Gliedern 16a, 16b, 16c besteht. Das Hebelgestänge 16 ist so ausgestaltet, daß ein Kniehebel-Effekt genutzt werden kann, durch den in bestimmten Schaltstellungen ein erhöhtes Antriebsmoment bereitgestellt wird. Eine solche Stellung ist in Figur 1 gezeigt. Sie entspricht der Park-Stellung des Automatikgetriebes, in der eine erhöhte Stellkraft benötigt wird. Wie aus den Figuren 1 und 2 ersichtlich ist, wird der Drehwinkelbereich α der Betätigungswelle 14 durch das Hebelgestänge in einen wesentlich kleineren Drehwinkelbereich β der Schaltwelle 12 umgesetzt.

In dem Gehäuse 10 ist ein elektromechanischer Stellantrieb mit einer elektronischen Steuereinheit aufgebaut. Das Gehäuse 10 wird durch einen Deckel 18 mit Dichtring 20 hermetisch verschlossen.

Der Stellantrieb enthält einen Elektromotor, der als bürstenloser Außenläufer-Motor ausgebildet ist. Er umfaßt einen Stator 22, der auf einer Leiterplatte 24 aufgebaut ist, und einen Außenläufer 26, der über einen Treibriemen 28 mit einer Seilscheibe 30 gekoppelt ist. Die Seilscheibe 30 ist auf einem Lagerzapfen eines Ritzels 32 gelagert und drehfest mit diesem verbunden. Das Ritzel 32 bildet das Sonnenrad eines Planetengetriebes. Das Ritzel 32 steht als Sonnenrad mit drei Planetenrädern 34 in Eingriff, die auf einer Steuerscheibe 36 gelagert sind, die den Planetenträger des Planetengetriebes bilden. Die Planetenräder 34 laufen in einem innenverzahnten, gehäusefesten Hohlrad 38 um. Zwischen den Planetenrädern 34 und der Seilscheibe 30 befindet sich eine zusätzliche Stützscheibe 40 für die Planetenräder 34.

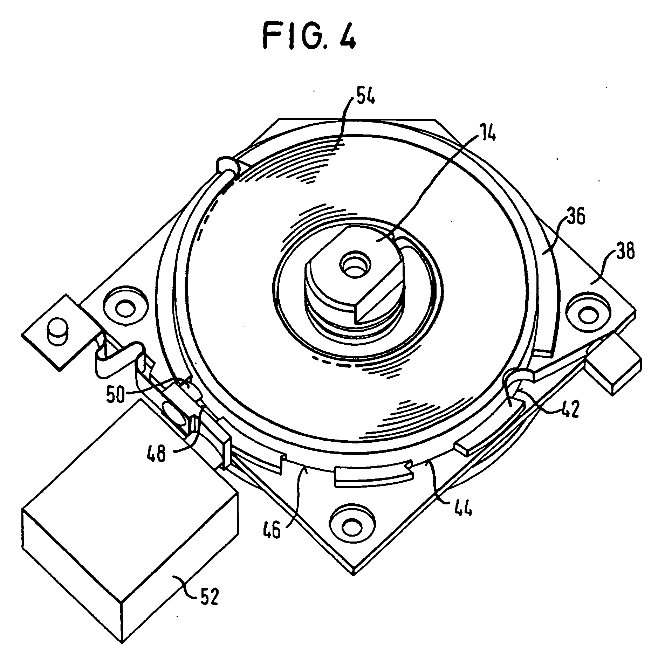

Die Steuerscheibe 36 ist einteilig mit der Betätigungswelle 14 ausgebildet. Wie insbesondere aus Figur 4 ersichtlich ist, hat die Steuerscheibe 36 an ihrem Umfang Rastausnehmungen 42 , 44, 46, 48, die den verschiedenen Schaltstellungen des Automatikgetriebes entsprechend angeordnet sind. Ein federbelasteter Riegel 50 wirkt mit den Rastausnehmungen 42 bis 48 zusammen. Im Ruhezustand ist die Steuerscheibe 36 mit der Betätigungswelle 14 durch den Riegel 50 in einer der durch die Rastausnehmungen vorgegebenen Schaltstellungen blokkiert. Der Riegel 50 wird durch einen Elektromagneten 52 mit zwei von einander unabhängigen Erregerwicklungen betätigt. Auf einer Seitenfläche der Steuerscheibe 36 ist eine Spiralfeder 54 angeordnet, die einen Kraftspeicher bildet. Das innere Ende der vorgespannten Spiralfeder 54 ist an der Betätigungswelle 14 angeschlossen, und das äußere Ende ist an einem gehäusefesten Teil eingehängt.

Auf der Leiterplatte 24 ist neben dem Stator 22 sowohl die Ansteuerschaltung des Elektromotors als auch die elektronische Steuereinheit der Betätigungsvorrichtung aufgebaut. Von der Leiterplatte 24 sind zwei Anschlußstecker 56, 58 aus dem Gehäuse 10 herausgeführt.

Die Arbeitsweise der Betätigungsvorrichtung ist wie folgt.

Im normalen Ruhezustand ist die Betätigungswelle 14 mit der Steuerscheibe 36 in der jeweils wirksamen Schaltstellung durch den Riegel 50 blockiert. Wenn ein Schaltbefehl zu der elektronischen Steuereinheit gelangt, beispielsweise über einen CAN-Bus, wird die eine Erregerwicklung des Elektromagneten 52 angesteuert und der Riegel 50 in die Freigabestellung bewegt. Gleichzeitig wird der Elektromotor durch die elektronische Steuereinheit aktiviert, um die gewünschte Drehstellung der Betätigungswelle 14 lagegeregelt anzufahren. Die Drehung des Außenläufers 26 wird durch den Riementrieb um einen Faktor von beispielsweise 6 untersetzt und durch das Planetengetriebe nochmals um den Faktor 7 untersetzt. Das hohe Drehmoment des sehr leistungsfähigen Elektromotors wird durch das Untersetzungs-Getriebe auf ein hohes Betätigungsmoment übersetzt, das an der Betätigungswelle 14 verfügbar ist. Durch das Hebelgestänge 16 wird das verfügbare Betätigungsmoment nochmals verstärkt, beispielsweise zur Herausbewegung der Schaltwelle 12 aus der Park-Stellung unter Last.

Zwar stellt die Betätigungsvorrichtung ein hohes Stellmoment zur Verfügung, jedoch wird durch die verlustarme Ausführung seiner Bestandteile eine Erwärmung weitgehend vermieden, zumal die Schaltvorgänge von sehr kurzer Dauer sind.

Der durch die Spiralfeder 54 gebildete Kraftspeicher ist permanent an die Betätigungswelle 14 angekoppelt, ebenso wie der Elektromotor. Wenn bei stehendem Fahrzeug der Zündschlüssel abgezogen wird, gelangt ein Ansteuersignal vom Zündschloß an die zweite Erregerwicklung des Elektromagneten 52, so daß der Riegel 50 kurzzeitig in die Freigabestellung bewegt wird. Die Betätigungswelle 14 wird nun durch die Spiralfeder 54 in die der Park-Stellung entsprechende Drehstellung bewegt, unabhängig von dem elektromotorischen Antrieb, der so verlustarm und reversibel ausgebildet ist, daß der Läufer 26 über das nun ins Schnelle übersetzende Untersetzungs-Getriebe mitgedreht werden kann.

In diesem Zustand entkoppelt die Ansteuerschaltung den Elektromotor, so daß der Drehung des Läufers keine durch den elektrischen Strom induzierten magnetischen Kräfte entgegenwirken.

In einer bevorzugten Ausführungsform der Erfindung wird die Park-Stellung automatisch eingenommen, wenn der Zündschlüssel aus dem Zündschloß entfernt wird, unabhängig von der elektrischen Stromversorgung des Fahrzeugs. In dieser Ausführungsform wird der Riegel 50 durch einen bistabilen Elektromagneten betätigt, der eine erste stabile Position aufweist, die dem Blockierzustand des Riegels entspricht, und eine zweite stabile Position aufweist, die dem Lösezustand des Riegel entspricht. Zur Umschaltung zwischen beiden stabilene Positionen wird der Riegel von einem elektrischen Stromimpuls angesteuert. Ein Kondensator mit einer Kapazität in der Größenordnung von 20000 µF bei etwa 10 V liefert für einen geeigneten, im Handel erhältlichen bistabilen Elektromagneten eine für einen Steuerimpuls ausreichende Energie, unabhängig von der elektrischen Stromversorgung des Fahrzeugs.

Gemäß einer weiteren Ausführungsform wird ein Reißen des Treibriemens 28 erkannt. Der Elektromotor ist intern mit einem Winkelmelder ausgestattet, der die inkrementelle Drehbewegung des Läufers erfaßt. Ein weiterer Winkelmelder ist der Seilscheibe 30 zugeordnet. Solange sich der Treibriemen 28 bewegt, ist zu erwarten, daß beide Winkelmelder synchrone, inkrementelle Ausgangssignale liefern. Die elektronische Steuerung erfaßt jede Abweichung von der Synchronisation zwischen den Ausgangssignalen der Winkelmelder und somit ein Reißen des Treibriemens.

## Patentansprüche

1. Betätigungsvorrichtung für die Schaltwelle (12) eines Automatikgetriebes in einem Kraftfahrzeug, folgendes aufweisend:
- ein Gehäuse (10);
- eine im Gehäuse (10) drehbar gelagerte Betätigungswelle (14);
- einen Elektromotor (22, 26);
- ein reversibles, verlustarmes Untersetzungs-Getriebe, durch das der Läufer (26) des Elektromotors (22, 26) direkt an die Betätigungswelle (14) angekoppelt ist;
- einen Kraftspeicher (54), durch den die Betätigungswelle (14) unabhängig von dem Elektromotor (22, 26) antreibbar ist;
- eine elektronische Steuereinheit, die den Elektromotor (22, 26) in Abhängigkeit von Steuersignalen ansteuert;
- eine Kopplungseinrichtung (16) zur Ankopplung der Betätigungswelle (14) an die Schaltwelle (12), wobei die Drehung der Betätigungswelle (14) durch die Kopplungseinrichtung (16) in den Steuersignalen entsprechende Drehwinkel der Schaltwelle (12) umgesetzt wird, **dadurch gekennzeichnet, daß**
die Drehstellungen der Betätigungswelle (14) durch einen im Ruhezustand selbsttätig eingreifenden Riegel (50) gesichert sind, der durch einen Elektromagnet (52) in eine Freigabestellung bewegbar ist und daß
der Kraftspeicher (54) die Betätigungswelle (14) permanent in eine Schaltstellung beaufschlagt, die der Park-Stellung des Automatikgetriebes des Kraftfahrzeugs entspricht.

2. Betätigungsvorrichtung nach Anspruch 1, **dadurch gekennzeichnet, daß** das Untersetzungs-Getriebe zweistufig ausgebildet ist.

3. Betätigungsvorrichtung nach Anspruch 2, **dadurch gekennzeichnet, daß** eine Stufe des Untersetzungs-Getriebes durch einen Treibriemen (28) und zwei Riemenscheiben (30) gebildet ist.

4. Betätigungsvorrichtung nach Anspruch 2, **dadurch gekennzeichnet, daß** eine Stufe des Untersetzungs-Getriebes durch ein Planetengetriebe gebildet ist.

5. Betätigungsvorrichtung nach einem der vorstehenden Ansprüche, **dadurch gekennzeichnet, daß** die Betätigungswelle (14) in diskreten Drehstellungen arretierbar ist, die den Schaltstellungen der Schaltwelle (12) entsprechen.

6. Betätigungsvorrichtung nach Anspruch 1, **dadurch gekennzeichnet, daß** der Kraftspeicher (54) die Betätigungswelle (14) in die der Park-Stellung entsprechende Schaltstellung bewegt, wenn der Riegel (50) sich in der Freigabestellung befindet, wobei der Elektromotor (22, 26) über das nun ins Schnelle übersetzende Untersetzungs-Getriebe mitgeschleppt wird.

7. Betätigungsvorrichtung nach Anspruch 6, **dadurch gekennzeichnet, daß** der Elektromagnet (22, 26) zwei unabhängige Erregerwicklungen aufweist, von denen die erste durch die elektronische Steuereinheit und die zweite durch ein Signal vom Zündschloß des Fahrzeugs angesteuert wird.

8. Betätigungsvorrichtung nach einem der vorstehenden Ansprüche 1, 6 oder 7, **dadurch gekennzeichnet, daß** die Betätigungswelle (14) drehfest mit einer Steuerscheibe (36) verbunden ist, die an ihrem Umfang Rastelemente (42, 44, 46, 48) aufweist, die den Schaltstellungen entsprechend angeordnet sind und mit denen der Riegel (50) zusammenwirkt.

9. Betätigungsvorrichtung nach einem der vorstehenden Ansprüche, **dadurch gekennzeichnet, daß** der Kraftspeicher (54) durch eine gespannte Feder gebildet ist, die zwischen dem Gehäuse (10) und der Betätigungswelle (14) wirksam ist.

10. Betätigungsvorrichtung nach den Ansprüchen 8 und 9, **dadurch gekennzeichnet, daß** die gespannte Feder (54) eine auf der Steuerscheibe (36) angeordnete Spiralfeder ist.

11. Betätigungsvorrichtung nach einem der vorstehenden Ansprüche, **dadurch gekennzeichnet, daß** die Kopplungseinrichtung ein Hebelgestänge (16) aufweist, das einen vorgegebenen Drehwinkel der Betätigungswelle (14) in einen kleineren Drehwinkel der Schaltwelle (12) umsetzt.

12. Betätigungsvorrichtung nach Anspruch 1, **dadurch gekennzeichnet, daß** das Hebelgestänge (16) aus drei Gliedern (16a, 16b, 16c) besteht, die einen Kniehebel-Effekt verwirklichen, der in wenigstens einer Schaltstellung, die insbesondere der Park-Stellung des Getriebes entspricht, eine erhöhte Stellkraft bereitstellt.

13. Betätigungsvorrichtung nach einem der Ansprüche 11 und 12, **dadurch gekennzeichnet, daß** die Glieder (16a, 16b, 16c) des Hebelgestänges (16) in solcher Weise elastisch gekoppelt sind, daß die Schaltwelle (12) in getriebeseitig vorbestimmten Schaltstellungen einrasten kann, wenn die Betätigungswelle (14) eine entsprechende Drehstellung einnimmt, die innerhalb eines zugelassenen Toleranzbereiches liegt.

14. Betätigungsvorrichtung nach einem der vorstehenden Ansprüche, **dadurch gekennzeichnet, daß** der Elektromotor (22, 26) ein bürstenloser vielpoliger Außenläufer-Motor ist.

15. Betätigungsvorrichtung nach Anspruch 14, **dadurch gekennzeichnet, daß** der Stator (22) des Elektromotors (22, 26) auf einer Leiterplatte (24) angeordnet ist, auf der die elektronische Steuereinheit aufgebaut ist.

16. Betätigungsvorrichtung nach einem der vorstehenden Ansprüche, **dadurch gekennzeichnet, daß** das Gehäuse (10) die Form eines flachen Quaders aufweist.

17. Betätigungsvorrichtung nach den Ansprüchen 1 bis 4, **dadurch gekennzeichnet, daß** der Läufer (26) des Elektromotors (22, 26) über den Treibriemen (28) mit einer Seilscheibe (30) gekoppelt ist, die ihrerseits mit dem Sonnenrad des Planetengetriebes gekoppelt ist.

18. Betätigungsvorrichtung nach Anspruch 17, **dadurch gekennzeichnet, daß** die Betätigungswelle (14) mit dem Planetenträger des Planetengetriebes gekoppelt ist.

19. Betätigungsvorrichtung nach den Ansprüchen 17 und 18, **dadurch gekennzeichnet, daß** die Planetenräder des Planetengetriebes in einem gehäusefesten Hohlrad umlaufen.

20. Betätigungsvorrichtung nach Anspruch 8 und einem der Ansprüche 17 bis 19, **dadurch gekennzeichnet, daß** die Steuerscheibe (36) zugleich den Planetenträger des Planetengetriebes bildet.

21. Betätigungsvorrichtung nach einem der vorstehenden Ansprüche, **dadurch gekennzeichnet, daß** die Steuereinheit eine Ansteuerschaltung aufweist, die den Elektromotor (22, 26) im Ruhezustand stromlos hält und somit die Drehung des Rotors (26) durch die in dem Kraftspeicher (54) gespeicherte Energie erlaubt.

22. Betätigungsvorrichtung nach einem der vorstehenden Ansprüche, **dadurch gekennzeichnet, daß** die Steuereinheit Schaltsignale über ein Bussystem empfängt.

23. Betätigungsvorrichtung nach Anspruch 1, **dadurch gekennzeichnet, daß** der Elektromagnet (52) ein bistabiler Elektromagnet ist, mit einem ersten stabilen Zustand, der der Blockierposition entspricht, und einem zweiten stabilen Zustand, der der Löseposition entspricht.

24. Betätigungsvorrichtung nach Anspruch 23, **dadurch gekennzeichnet, daß** der bistabile Elektromagnet (52) durch einem von einem Speicherkondensator bereitgestellten Stromimpuls zwischen dem Blockierzustand und dem Lösezustand umschaltbar ist.

25. Betätigungsvorrichtung nach Anspruch 3, der einen ersten Winkelmelder in dem Elektromotor (22, 26) aufweist, sowie einen zweiten Winkelmelder, der einer der Seilscheiben (30) zugeordnet ist, und Erfassungsmittel, die ein Reißen des Treibriemens (28) als Antwort auf einen Ausfall der Synchronität zwischen Signalen von dem ersten und dem zweiten Winkelmelder erkennen.

## Claims

1. An actuator for the change speed shaft (12) of an automatic transmission in a motor vehicle, comprising:
- a housing (10);
- an actuating shaft (14) rotatably mounted in the housing (10);
- an electric motor (22, 26);
- a reversible, low-loss reduction gearing by which the rotor (26) of the electric motor (22, 26) is directly coupled to the actuating shaft (14);
- an energy storing means (54) by which the actuating shaft (14) may be driven independently of the electric motor (22, 26);
- an electronic controller for driving the electric motor (22, 26) in response to control signals;
- a coupling means (16) for coupling the actuating shaft (14) to the change speed shaft (12), rotation of the actuating shaft (14) by the coupling means (16) being converted into angles of rotation of the change speed shaft (12) which correspond to the control signals, **characterized in that**
the rotary positions of the actuating shaft (14) are locked by a latch (50) automatically engaging in the non-operated condition, the latch (50) being movable into a release position by a solenoid (52), and that
the energy storing means (54) permanently urges the actuating shaft (14) into a shift position which corresponds to the parking position of the automatic transmission of the motor vehicle.

2. The actuator as set forth in claim 1, **characterized in that** the reduction gearing is of a two-stage type.

3. The actuator as set forth in claim 2, **characterized in that** one stage of the reduction gearing is formed by a driving belt (28) and a pair of belt pulleys (30).

4. The actuator as set forth in claim 2, **characterized in that** one stage of the reduction gearing is formed by a planetary gearing.

5. The actuator as set forth in any of the preceding claims, **characterized in that** the actuating shaft (14) can be arrested in discrete rotary positions which correspond to the shift positions of the change speed shaft (12).

6. The actuator as set forth in claim 1, **characterized in that** the energy storing means (54) moves the actuating shaft (14) into the shift position which corresponds to the parking position when the latch (50) is in the release position, the electric motor (22, 26) being entrained via the reduction gearing now operating in a gearing up mode.

7. The actuator as set forth in claim 6, **characterized in that** the solenoid (52) has two independent exciting windings, the first of which is driven by the electronic controller and the second by a signal from the ignition lock of the vehicle.

8. The actuator as set forth in any of the preceding claims 1, 6 or 7, **characterized in that** the actuating shaft (14) is connected to a control disc (36) for joint rotation, the control disc (36) having ratchet elements (42, 44, 46, 48) on its circumference which are arranged in correspondence with the shift positions and with which the latch (50) cooperates.

9. The actuator as set forth in any of the preceding claims, **characterized in that** the energy storing means (54) is formed by a tensioned spring effective between the housing (10) and the actuating shaft (14).

10. The actuator as set forth in claims 8 and 9, **characterized in that** the tensioned spring (54) is a spiral spring arranged on the control disc (36).

11. The actuator as set forth in any of the preceding claims, **characterized in that** the coupling means comprises a lever linkage (16) which translates a predefined angle of rotation of the actuating shaft (14) into a smaller angle of rotation of the change speed shaft (12).

12. The actuator as set forth in claim 1, **characterized in that** the lever linkage (16) is made up of three members (16a, 16b, 16c) achieving a knee-joint effect which in at least one shift position, corresponding in particular to the parking position of the transmission, provides an increased actuating force.

13. The actuator as set forth in either of claims 11 and 12, **characterized in that** the members (16a, 16b, 16c) of the lever linkage (16) are elastically coupled such as to allow the change speed shaft (12) to engage shift positions predefined in the transmission when the actuating shaft (14) assumes a corresponding rotary position lying within an admissible tolerance range.

14. The actuator as set forth in any of the preceding claims, **characterized in that** the electric motor (22, 26) is a brushless multi-pole external rotor motor.

15. The actuator as set forth in claim 14, **characterized in that** the stator (22) of the electric motor (22, 26) is arranged on a printed circuit board (24) on which the electronic controller is configured.

16. The actuator as set forth in any of the preceding claims, **characterized in that** the housing (10) has the shape of a slim right parallelepiped.

17. The actuator as set forth in claims 1 to 4, **characterized in that** the rotor (26) of the electric motor (22, 26) is coupled via the driving belt (28) to a belt pulley (30) which is in turn coupled to the sun wheel of the planetary gearing.

18. The actuator as set forth in claim 17, **characterized in that** the actuating shaft (14) is coupled to the planet carrier of the planetary gearing.

19. The actuator as set forth in claims 17 and 18, **characterized in that** the planet gears of the planetary gearing orbit in an annular gear fixedly mounted in the housing.

20. The actuator as set forth in claim 8 and any of claims 17 to 19, **characterized in that** the control disc (36) at the same time forms the planet carrier of the planetary gearing.

21. The actuator as set forth in any of the preceding claims, **characterized in that** the controller comprises a driving circuit which maintains the electric motor (22, 26) de-energized in the non-operated condition, thus permitting rotation of the rotor (26) by the energy stored in the energy storing means (54).

22. The actuator as set forth in any of the preceding claims, **characterized in that** the controller receives change speed signals via a bus system.

23. The actuator as set forth in claim 1, **characterized in that** the solenoid (52) is a bistable solenoid with a first stable condition corresponding to the engaging position and a second stable condition corresponding to the release position.

24. The actuator as set forth in claim 23, **characterized in that** the bistable solenoid (52) is adapted to be switched over between the engagement condition and the release condition by a current pulse supplied from a storage capacitor.

25. The actuator as set forth in claim 3, comprising a first incremental angular resolver in the electric motor (22, 26) and a second incremental angular resolver associated with one of the belt pulleys (30), and detecting means detecting rupture of the driving belt (28) in response to failure of synchronism between signals from the first and second incremental angular resolvers.

## Revendications

1. Dispositif d'actionnement pour l'arbre de changement de vitesse (12) d'une boîte automatique dans un véhicule automobile, comportant les éléments suivants :
- un carter (10) ;
- un arbre d'actionnement (14) monté rotatif dans le carter (10);
- un moteur électrique (22, 26) ;
- un démultiplicateur réversible et à faibles pertes, par lequel le rotor (26) du moteur électrique (22, 26) est couplé directement à l'arbre d'actionnement (14) ;
- un accumulateur de force (54) par lequel l'arbre d'actionnement (14) peut être entraîné indépendamment du moteur électrique (22, 26) ;
- une unité de commande électronique qui pilote le moteur électrique (22, 26) en fonction de signaux de commande ;
- un dispositif de couplage (16) pour coupler l'arbre d'actionnement (14) à l'arbre de changement de vitesse (12), la rotation de l'arbre d'actionnement (14) étant convertie par le dispositif de couplage (16) en angles de rotation de l'arbre de changement de vitesse (12) correspondant aux signaux de commande,
**caractérisé en ce que**
les positions de rotation de l'arbre d'actionnement (14) sont arrêtées par un verrou (50) qui s'engage automatiquement à l'état de repos et qui peut être déplacé par un électroaimant (52) dans une position de libération, et **en ce que**
l'accumulateur de force (54) sollicite l'arbre d'actionnement (14) de façon permanente dans une position de changement de vitesse qui correspond à la position de parking de la boîte automatique du véhicule automobile.

2. Dispositif d'actionnement selon la revendication 1, **caractérisé en ce que** le démultiplicateur est conçu avec deux étages.

3. Dispositif d'actionnement selon la revendication 2, **caractérisé en ce qu'**un étage du démultiplicateur est formé par une courroie d'entraînement (28) et deux poulies à courroie (30).

4. Dispositif d'actionnement selon la revendication 2, **caractérisé en ce qu'**un étage du démultiplicateur est formé par un engrenage planétaire.

5. Dispositif d'actionnement selon l'une des revendications précédentes, **caractérisé en ce que** l'arbre d'actionnement (14) peut être arrêté dans des positions de rotation discrètes qui correspondent aux positions de changement de vitesse de l'arbre de changement de vitesse (12).

6. Dispositif d'actionnement selon la revendication 1, **caractérisé en ce que** l'accumulateur de force (54) déplace l'arbre d'actionnement (14) dans la position de changement de vitesse correspondant à la position de parking, lorsque le verrou (50) se trouve dans la position de libération, le moteur électrique (22, 26) étant alors entraîné par le démultiplicateur ayant maintenant un effet multiplicateur.

7. Dispositif d'actionnement selon la revendication 6, **caractérisé en ce que** l'électroaimant (52) présente deux enroulements inducteurs indépendants, dont le premier est piloté par l'unité de commande électronique et le deuxième par un signal venant de la serrure de contact du véhicule.

8. Dispositif d'actionnement selon l'une des revendications précédentes 1, 6 ou 7, **caractérisé en ce que** l'arbre d'actionnement (14) est relié de manière solidaire en rotation à un disque de commande (36) qui présente sur sa périphérie des éléments d'engagement (42, 44, 46, 48) qui sont disposés en fonction des positions de changement de vitesse et avec lesquels le verrou (50) coopère.

9. Dispositif d'actionnement selon l'une des revendications précédentes, **caractérisé en ce que** l'accumulateur de force (54) est constitué par un ressort tendu qui agit entre le boîtier (10) et l'arbre d'actionnement (14).

10. Dispositif d'actionnement selon les revendications 8 et 9, **caractérisé en ce que** le ressort tendu (54) est un ressort en spirale disposé sur le disque de commande (36).

11. Dispositif d'actionnement selon l'une des revendications précédentes, **caractérisé en ce que** le dispositif de couplage présente un mécanisme à levier (16) qui convertit un angle de rotation prédéfini de l'arbre d'actionnement (14) en un angle de rotation plus petit de l'arbre de changement de vitesse (12).

12. Dispositif d'actionnement selon la revendication 1, **caractérisé en ce que** le mécanisme à levier (16) est composé de trois membres (16a, 16b, 16c) qui réalisent un effet de levier à genouillère lequel met à disposition une force d'actionnement élevée dans au moins une position de changement de vitesse qui correspond en particulier à la position de parking de la boîte de vitesses.

13. Dispositif d'actionnement selon l'une des revendications 11 et 12, **caractérisé en ce que** les membres (16a, 16b, 16c) du mécanisme à levier (16) sont couplés de façon élastique de telle sorte que l'arbre de changement de vitesse (12) peut s'enclencher dans des positions de changement de vitesse prédéfinies du côté de la boîte de vitesses, lorsque l'arbre d'actionnement (14) occupe une position de rotation correspondante qui se situe dans une plage de tolérance admise.

14. Dispositif d'actionnement selon l'une des revendications précédentes, **caractérisé en ce que** le moteur électrique (22, 26) est un moteur multipolaire à rotor extérieur et sans balai.

15. Dispositif d'actionnement selon la revendication 14, **caractérisé en ce que** le stator (22) du moteur électrique (22, 26) est disposé sur une carte imprimée (24) sur laquelle est montée l'unité de commande électronique.

16. Dispositif d'actionnement selon l'une des revendications précédentes, **caractérisé en ce que** le carter (10) présente la forme d'un parallélépipède plat.

17. Dispositif d'actionnement selon l'une des revendications 1 à 4, **caractérisé en ce que** le rotor (26) du moteur électrique (22, 26) est couplé par l'intermédiaire de la courroie d'entraînement (28) à une poulie à câble (30) qui pour sa part est couplée à la roue solaire de l'engrenage planétaire.

18. Dispositif d'actionnement selon la revendication 17, **caractérisé en ce que** l'arbre d'actionnement (14) est couplé au porte-planétaire de l'engrenage planétaire.

19. Dispositif d'actionnement selon les revendications 17 et 18, **caractérisé en ce que** les roues planétaires de l'engrenage planétaire tournent dans un roue creuse fixée au carter.

20. Dispositif d'actionnement selon la revendication 8 et l'une des revendications 17 à 19, **caractérisé en ce que** le disque de commande (36) forme en même temps le porte-planétaire de l'engrenage planétaire.

21. Dispositif d'actionnement selon l'une des revendications précédentes, **caractérisé en ce que** l'unité de commande présente un circuit de pilotage qui maintient le moteur électrique (22, 26) hors tension à l'état de repos et permet ainsi la rotation du rotor (26) par l'énergie stockée dans l'accumulateur de force (54).

22. Dispositif d'actionnement selon l'une des revendications précédentes, **caractérisé en ce que** l'unité de commande reçoit des signaux de changement de vitesse via un système de bus.

23. Dispositif d'actionnement selon la revendication 1, **caractérisé en ce que** l'électroaimant (52) est un électroaimant bistable, avec un premier état stable qui correspond à la position de blocage, et un deuxième état stable qui correspond à la position de libération.

24. Dispositif d'actionnement selon la revendication 23, **caractérisé en ce que** l'électroaimant bistable (52) peut être commuté par une impulsion de courant, fournie par un condensateur de stockage, entre l'état de blocage et l'état de libération.

25. Dispositif d'actionnement selon la revendication 3, qui présente un premier détecteur d'angle dans le moteur électrique (22, 26) et un deuxième détecteur d'angle qui est associé à l'une des poulies à câble (30), et des moyens de détection qui identifient une rupture de la courroie d'entraînement (28) en réponse à une défaillance du synchronisme entre les signaux venant du premier et du deuxième détecteur d'angle.
